## Europäisches Patentamt

## European Patent Office

## Office européen des brevets

(19)

(11) Veröffentlichungsnummer: **0 232 739**
**B1**

(12) **EUROPÄISCHE PATENTSCHRIFT**

(45) Veröffentlichungstag der Patentschrift:
**18.07.90**

(51) Int. Cl.⁵: **G01D 15/24**

(21) Anmeldenummer: **87100444.6**

(22) Anmeldetag: **15.01.87**

(54) **Registrieranordnung mit einem Stellungsgeber.**

(30) Priorität: **05.02.86 DE 3603480**

(43) Veröffentlichungstag der Anmeldung:
**19.08.87 Patentblatt 87/34**

(45) Bekanntmachung des Hinweises auf die Patenterteilung:
**18.07.90 Patentblatt 90/29**

(84) Benannte Vertragsstaaten:
**DE ES FR GB IT**

(56) Entgegenhaltungen:
**DE-A- 2 738 708**
**DE-A- 3 338 972**

(73) Patentinhaber: **Mannesmann Kienzle GmbH,**
**Heinrich-Hertz-Strasse,**
**D-7730 Villingen-Schwenningen(DE)**

(72) Erfinder: **Helmschrott, Norbert, Wasenstrasse 94,**
**D-7730 Villingen-Schwenningen(DE)**
Erfinder: **Kirner, Herbert, Wolfstiegweg 4,**
**D-7730 Villingen-Schwenningen(DE)**

## Beschreibung

Die Erfindung betrifft eine Registrieranordnung mit einem Stellungsgeber, bestehend aus einem auf Führungsstangen geradlinig, quer zur Bewegungsrichtung eines Aufzeichnungsträgers verschiebbar gelagerten Registrierschlitten, welcher ein Registrierorgan trägt und welcher mit einem Stellmotor in getrieblicher Verbindung steht, aus zwei in einer Ebene parallel zu den Führungsstangen in einem gewissen Abstand nebeneinander angeordneten Kontaktbahnen, einer Widerstands- und einer Kollektorbahn und aus einer den Kontaktbahnen zugeordneten und synchron mit dem Registrierschlitten bewegbaren Schleiffeder-Kontaktbrücke.

Bekanntlich wird bei registrierenden Meßgeräten - als Beispiel seien Fahrtschreiber genannt - bevorzugt die Kompensationsmeßmethode angewandt. Dabei wird der von einem Geber gelieferte Sollwert einer Meßgröße fortlaufend mit dem angezeigten Istwert verglichen und bei Ungleichheit der Istwert und gleichzeitig auch die kompensierende Vergleichsgröße solange verändert bzw. nachgestellt, bis der Ausgang des Verstärkers der Meßschaltung stromlos ist. Für diesen Nachführvorgang findet üblicherweise ein gleichstromgespeister Stellmotor Anwendung, der über ein geeignetes Getriebe gleichzeitig einerseits das Registrierorgan bzw. dessen Träger dem Istwert entsprechend verstellt, andererseits beispielsweise einen Stellungsgeber, ein Potentiometer, betätigt, dessen istwertporportionale Ausgangsspannung zur Vergleichsstelle der Meßschaltung zurückgeführt wird. Das dem Stellmotor nachgeschaltete Getriebe hat in diesem Falle die Aufgabe, durch eine geeignete Untersetzung die Einstellumdrehungen des Stellmotors an die für den jeweiligen Meßwert festgelegten Registrierausschläge anzupassen und, indem das Getriebe auch als Drehmomentwandler wirkt, die Belastung des Stellmotors durch die Registrierkräfte zu verringern.

Bisher war man aufgrund der Forderung nach vielseitiger, d. h. nicht gerätebezogener Verwendbarkeit, nach Austauschfähigkeit und maschineller Montierbarkeit und demgemäß einer zufriedenstellend reproduzierbaren Funktionsqualität sowie der Tatsache, daß handelsübliche Stellungsgeber vom Aufwand und Raumbedarf abgesehen sich meist nicht ohne weiteres in ein konstruktives Konzept einfügen lassen, bemüht, Stellmotor, Getriebe und Stellungsgeber als Nachlaufaggregat baulich zusammenzufassen.

Ein derartiges und, wie beispielsweise die DE-OS 33 38 972 zeigt, zweifellos ausgereiftes Nachlaufaggregat stellt zwar eine in vieler Hinsicht vorteilhafte, insbesondere jedoch vielseitig verwendbare, leicht anflanschbare und, weil staubdicht gekapselt, auch unabhängig von einem bestimmten Meß- und Registriergerät handelbare Baueinheit dar, es setzt jedoch sowohl bei einem gegebenen Gerätekonzept als auch bei einer Neuentwicklung eines Registriergerätes, einer weiteren Aufwandminimierung und einer konsequenten Optimierung bezüglich Funktion und Raumgestaltung, insbesondere Bauraumverdichtung Grenzen.

Diese Einschränkung der konstruktiven Freiheit wirkt sich verständlicherweise dann nachteilig aus, wenn, was insbesondere bei in Großserie herzustellenden Registriergeräten der Fall ist, weniger die vielseitige Verwendbarkeit und das handelsfähige Aggregat, sondern eine weitgehende Integration von Registriermechanik und deren Antriebsmitteln, Stellungsgeber und Meßschaltung, angestrebt wrd. Außerdem müssen mit der geschilderten Aggregation der Aufwand eines selbsttragenden und wenigstens staubdicht schließenden Gehäuses, besondere Befestigungsvorkehrungen, eine höhere Drehmomentsbelastung des Stellmotors sowie gewisse Übertragungsfehler infolge der erforderlichen getrieblichen Verbindung zwischen dem Nachlaufaggregat und dem Träger des Registrierorgans und, weil kreisförmige Kontaktbahnen erforderlich sind, ein höherer Aufwand auch bezüglich des Stellungsgebers selbst in Kauf genommen werden.

Aus diesen Gründen ist es naheliegend, den Stellungsgeber und den Träger des Registrierorgans bzw. den Registrierschlitten unmittelbar miteinander zu koppeln, d. h. gemäß der DE-OS 27 38 708 Kontaktbahnen, nämlich eine Widerstandsbahn und eine konzentrisch zugeordnete Kollektorbahn, in geeigneter Weise parallel zur geradlinigen Führung des Registrierorgans anzuordnen und die erforderliche Schleiffeder-Kontaktbrücke dem Registrierschlitten zuzuordnen.

Diese Lösung weist zwar den Weg für die angestrebte weitere Bauraumverdichtung und Integration, sie ist jedoch in der Praxis wegen der in hohem Maße schmutzempfindlichen, bei dem in der obigen DE-OS dargestellten Ausführungsbeispiel aber völlig ungeschützten Kontaktbahnen nicht ausreichend funktionssicher.

Der vorliegenden Erfindung lag daher die Aufgabe zugrunde, bei einer möglichst engen räumlichen Zuordnung von Registrierschlitten und Stellungsgeber eine einfache, staubschützende Kapselung des Stellungsgebers zu schaffen.

Die Lösung der gestellten Aufgabe ist dadurch gekennzeichnet, daß ein im wesentlichen quaderförmiges, einseitig offenes Gehäuse sowie Kupplungsmittel zur Mitnahme des Gehäuses durch den Registrierschlitten vorgesehen sind, daß die Länge der Öffnung des Gehäuses größenordnungsmäßig der zweifachen Länge der Kontaktbahnen entspricht, während die Breite der Öffnung um ein geringes Maß größer ist als die Gesamtbreite beider Widerstandsbahnen, daß an der Innenseite der der Öffnung gegenüberliegenden Gehäusewand die Schleiffeder-Kontaktbrücke angeordnet ist und daß das Gehäuse unter der Wirkung von wenigstens einer zwischen dem Registrierschlitten und dem Gehäuse angeordneten Feder mit den Stirnflächen der die Öffnung umgebenden Gehäusewände die Kontaktbahnen umgreifend auf einer den Kontaktbahnen zugeordneten Platte aufliegt.

Ein bevorzugtes Ausführungsbeispiel zeichnet sich dadurch aus, daß einer die Führungsstangen, den Stellmotor und das Getriebe tragenden Platine eine mit den Kontaktbahnen versehene und dem Gehäuse als Auflage dienende Gleitplatte zugeordnet ist.

Ein weiterer, bemerkenswerter Vorschlag sieht vor, daß die Kontaktbahnen auf einer mit der Platine verbundenen, wenigstens die den Stellmotor steuernden, elektrischen Bauelemente tragenden Leiterplatte aufgebracht sind.

Die gefundene Lösung für einen zuverlässigen Schutz der Kontaktbahnen und der mit den Kontaktbahnen zummenwirkenden Schleiffeder-Kontaktbrücke gestattet bei gesicherter Funktion des Stellungsgebers nicht nur bezüglich der Zuordnung von Registriermechanik und Stellungsgeber ein Höchstmaß an Bauraumverdichtung und eine Minimierung des Fertigungsaufwandes, sondern sie eröffnet auch die Möglichkeit einer konstruktiven Integration von Registriermechanik, Stellungsgeber und Meßschaltung, indem die Registriermechanik und die Widerstandsbahnen einer die Elemente der Meßschaltung tragenden Leiterplatte zugeordnet werden.

Im folgenden sei die Erfindung anhand der beigefügten Zeichnungen näher erläutert.

Es zeigen

FIG. 1 die Draufsicht eines Ausführungsbeispiels einer im Prinzip gemäß dem Oberbegriff des Anspruchs 1 ausgebildeten Registrieranordnung,

FIG. 2 eine Seitenansicht der in FIG. 1 dargestellten Registrieranordnung und

FIG. 3 einen Schnitt eines Ausführungsbeispiels, bei dem die Widerstandsbahnen und die Registriermechanik einer die Meßschaltung tragenden Leiterplatte zugeordnet sind.

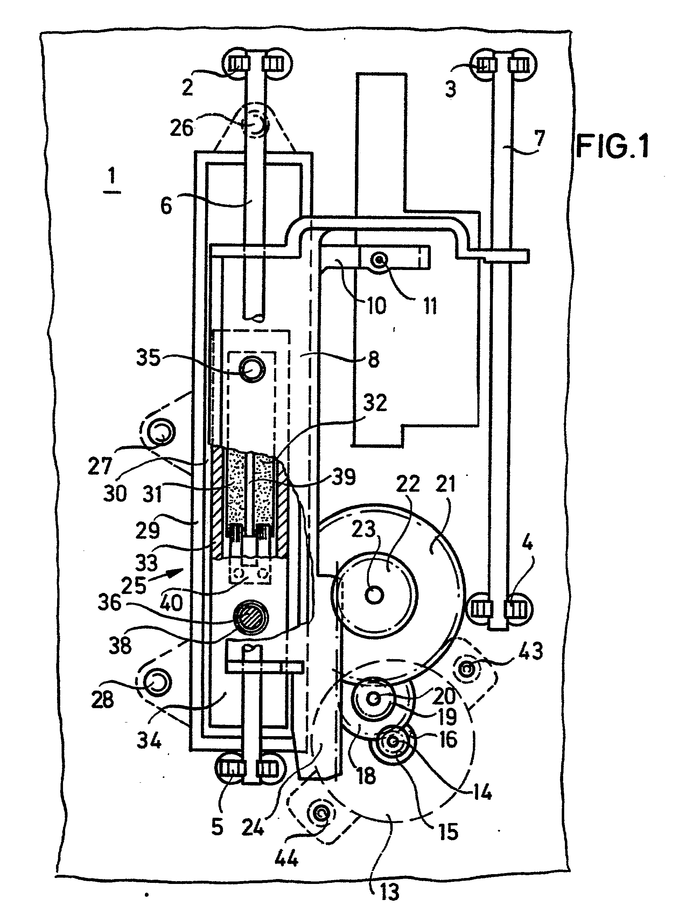

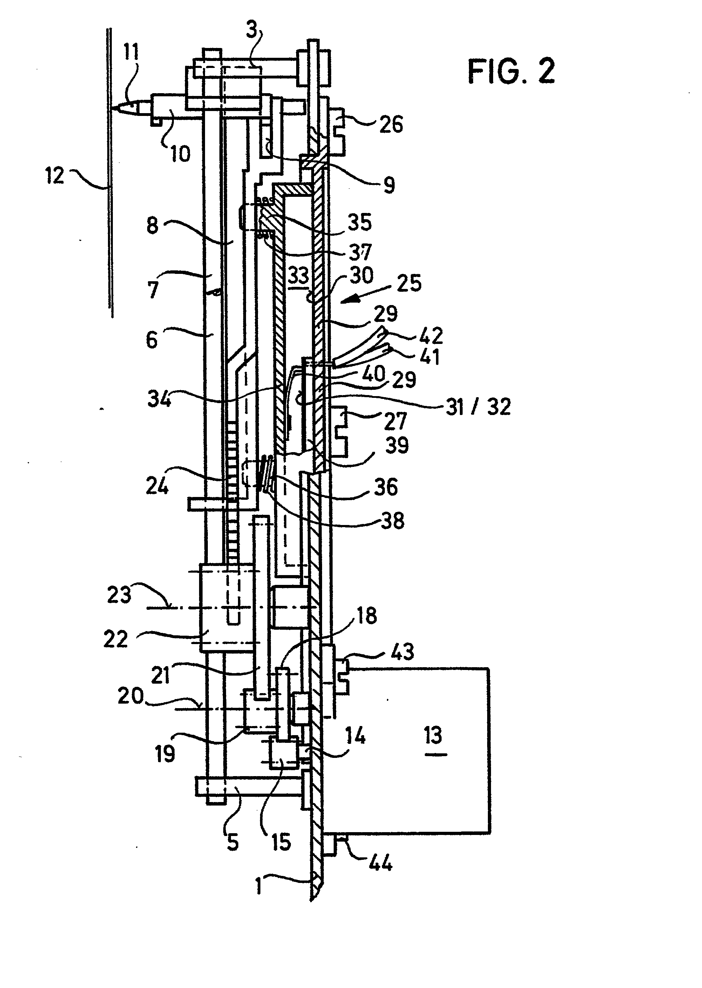

Wie FIG. 1 und FIG. 2 zeigen, sind an einer in das betreffende Registriergerät einsetzbaren, vorzugsweise metallischen Platine 1 Stützen 2, 3, 4 und 5 beispielsweise in Outsert-Spritzgußtechnik angeformt. Die Stützen 2, 3, 4 und 5 dienen der Halterung von Führungsstangen 6 und 7, auf denen ein Registrierschlitten 8 in an sich eindeutiger und dementsprechend nicht näher erläuterter Weise verschiebbar gelagert ist. Ein in einer im Registrierschlitten 8 ausgeformten Tasche 9 befestigter Halter 10 ist als eine justierbare Lagerbrücke für einen als Registrierorgan dienenden, in geeigneter Weise axial gefedert gelagerten Schreibstift 11 ausgebildet. Mit 12 ist ein Aufzeichnungsträger, beispielsweise eine mit einer Wachs- bzw. wachsähnlichen Registrierschicht belegte Diagrammscheibe, auf der der Schreibstift 11 wirksam ist, angedeutet.

Der Antrieb des Registrierschlittens 8 geht aus von einem an der Platine 1 mittels Schrauben 43 und 44 befestigten Stellmotor 13, dessen Welle 14 und das auf dieser befestigte Ritzel 15 durch eine in der Platine 1 vorgesehene Öffnung 16 an der Gegenseite der Platine 1 herausragen. Das Ritzel 15 steht in Eingriff mit einem Zahnrad 18 eines Zahnradpaares 18/19, welches auf einer Achse 20 gelagert ist und welches über das Zahnrad 19 mit einem Zahnrad 21 eines weiteren Zahnradpaares 21/22, das auf einer Achse 23 gelagert ist, kämmt. Das Zahnrad 22 steht seinerseits in Eingriff mit einer am Registrierschlitten 8 ausgebildeten Verzahnung 24.

Der dem Registrierschlitten 8 zugeordnete Stellungsgeber 25 weist zunächst ein in einen geeigneten Ausschnitt der Platine 1 einsetzbares und mittels Schrauben 26, 27 und 28 befestigbares, wannenförmiges Bauteil 29 auf, dessen Boden 30 einem einseitig offenen, die Kontaktbahnen, d. h. die Widerstands- und Kollektorbahn 31 und 32 des Stellungsgebers 25 umgreifenden, quaderförmigen Gehäuse 33, welches mit den Stirnflächen der die Öffnung umgebenden, nicht näher bezeichneten Gehäusewände auf dem Boden 30 aufliegt, als Gleitplatte dient. Zur Mitnahme des die Kontaktbahnen 31 und 32 schützenden Gehäuses 33 durch den Registrierschlitten 8 sind an der der Öffnung gegenüberliegenden Gehäusewand 34 nach außen weisende Führungszapfen 35 und 36 ausgebildet, die in entsprechende, jedoch nicht bezeichnete Öffnungen im Registrierschlitten 8 eingreifen. Den Führungszapfen 35 und 36 sind ferner Druckfedern 37 und 38 zugeordnet, die eine federnde Auflage des Gehäuses 33 auf der Gleitplatte 30 bewirken. Durch die Anordnung der Führungszapfen 35 und 36 derart, daß die Wirkungslinien der Druckfedern 37 und 38 die Mittenlinie der Führungsstange 6 schneiden, muß zwar eine vergrößerte Bauhöhe in Kauf genommen werden, andererseits wird aber ein von den Druckfedern 37, 38 ausgehendes Kippmoment auf den Registrierschlitten 8 vermieden.

An der Innenseite der Gehäusewand 34 ist eine mit den Kontaktbahnen 31 und 32, die in dem in den FIG. 1 und 2 dargestellten Ausführungsbeispiel auf einem speziellen Träger 39 aufgebracht sind, zusammenwirkende Schleiffeder-Kontaktbrücke 40 befestigt. Über die Leitungen 41 und 42, die in geeigneter Weise mit den Kontaktbahnen 31 und 32 kontaktiert sind, steht der Stellungsgeber 25 mit einer nicht dargestellten Meßschaltung in Verbindung.

Der Vollständigkeit halber sei noch erwähnt, daß die Kontakt bahnen 31, 32 in Form von Folienmaterial oder im Siebdruckverfahren unmittelbar auf das Bauteil 29 oder selbst auch auf die Platine 1 aufgebracht werden können. Im letzteren Falle würde dann die Oberfläche der Platine 1 gleichzeitig die Gleitfläche für das staubschützende Gehäuse 33 bilden, wobei dann jedoch auf eine gewisse, beim dargestellten Ausführungsbeispiel gegebene Labyrinthwirkung verzichtet werden müßte. Ferner sei erwähnt, daß die Länge der Öffnung des Gehäuses 33 dem erforderlichen Registrierhub plus der Länge der Kontaktbahnen 31, 32 entsprechen muß, wobei die Länge der Kontaktbahnen 31, 32 verständlicherweise gleich bzw. nur wenig größer als der Registrierhub gewählt werden wird, d. h. die Länge der Öffnung des Gehäuses 33 muß größenordnungsmäßig die doppelte Länge der Kontaktbahnen 31, 32 betragen.

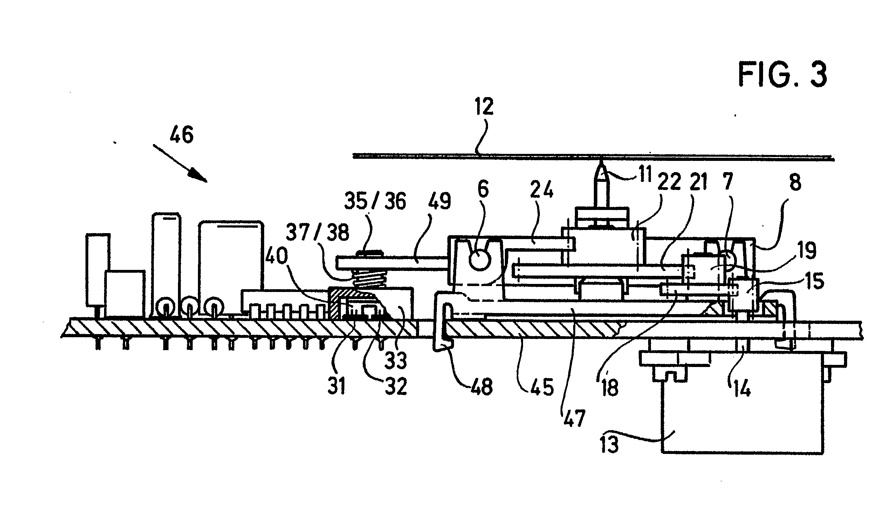

Eine besonders niedrige Bauhöhe wird mit dem Ausführungsbeispiel gemäß FIG. 3 erzielt. Bei diesem Ausführungsbeispiel sind die Widerstandsbahnen 31, 32 auf einer Leiterplatte 45 angebracht, die die Leiterbahnen sowie die elektrischen Bauelemente der Meßschaltung des Registriergerätes trägt und von denen einige wenige in FIG. 3 dargestellt und mit 46 bezeichnet sind. Während der Stellmotor 13 unmittelbar an der Leiterplatte 45 befestigt ist, sind die übrigen Elemente der Registriermechanik, d. h. die Führungsstangen 6, 7 der in geeigneter Weise gestaltete Registrierschlitten 8 sowie die Zahnradpaare 18, 19 und 21, 22 auf einem als Spritzgußteil ausgebildeten Gestell 47 angeordnet, welches seinerseits mittels mehrerer Rasthaken, von denen einer mit 48 bezeichnet ist, mit der Leiterplatte 45 verbunden ist. Dabei ist es zweckmäßig, an dem Gestell 47 nicht näher bezeichnete Abstützungen vorzusehen. Das den Widerstandsbahnen 31, 32 zugeordnete Gehäuse 33 wird bei diesem Ausführungsbeispiel von einem am Registrierschlitten 8 angeformten Arm 49, in dem die Führungszapfen 35, 36 eingreifen, schlittenparallel geführt.

Als weitere Vereinfachung, d. h. Bauteilereduktion, aber auch Bauraumverdichtung wäre es denkbar, die den Führungsstangen 6, 7 zugeordneten Stützen 2, 3, 4, 5 sowie die Achsen 20 und 23 der Zahnradpaare 18/19 und 21/22 unmittelbar mit der entsprechend steif ausgebildeten Leiterplatte 45 zu verbinden, vorzugsweise ebenfalls mittels geeigneter Rastverbindungen.

## Patentansprüche

1. Registrieranordnung mit einem Stellungsgeber, bestehend aus einem auf Führungsstangen (6, 7) geradlinig, quer zur Bewegungsrichtung eines Aufzeichnungsträgers (12) verschiebbar gelagerten Registrierschlitten (18), welcher ein Registrierorgan (11) trägt und welcher mit einem Stellmotor (13) in getrieblicher Verbindung steht,
aus zwei in einer Ebene parallel zu den Führungsstangen (6, 7) in einem gewissen Abstand nebeneinander angeordneten Kontaktbahnen (31, 32), einer Widerstandsbahn und einer Kollektorbahn, und aus einer den Kontaktbahnen (31, 32) zugeordneten und synchron mit dem Schlitten bewegbaren Schleiffeder-Kontaktbrücke (40), dadurch gekennzeichnet, daß ein im wesentlichen quaderförmiges, einseitig offenes Gehäuse (33) sowie Kupplungsmittel zur Mitnahme des Gehäuses (33) durch den Registrierschlitten (8) vorgesehen sind,
daß die Länge der Öffnung des Gehäuses (33) größenordnungsmäßig der zweifachen Länge der Kontaktbahnen (31, 32) entspricht, während die Breite der Öffnung um ein geringes Maß größer ist als die Gesamtbreite beider Kontaktbahnen (31, 32)
daß an der Innenseite der der Öffnung gegenüberliegenden Gehäusewand (34) die Schleiffeder-Kontaktbrücke (40) angeordnet ist und
daß das Gehäuse (33) unter der Wirkung von wenigstens einer zwischen dem Registrierschlitten (8) und dem Gehäuse (33) angeordneten Feder mit den Stirnflächen der die Öffnung umgebenden Gehäusewände die Kontaktbahnen (31, 32) umgreifend auf einer den Kontaktbahnen (31, 32) zugeordneten Platte aufliegt.

2. Registrieranordnung mit einem Stellungsgeber nach Anspruch 1, dadurch gekennzeichnet, daß an der Gehäusewand (34) nach außen weisende Führungszapfen (35, 36) und in dem Registrierschlitten (8) dem Durchmesser der Führungszapfen (35, 36) entsprechende Öffnungen ausgebildet und daß den Führungszapfen (35, 36) zugeordnete Druckfedern (37, 38) vorgesehen sind.

3. Registrieranordnung mit einem Stellungsgeber nach Anspruch 1, dadurch gekennzeichnet, daß einer die Führungsstangen (6, 7), den Stellmotor (13) und das Getriebe (18, 19, 21, 22) tragenden Platine (1) eine mit den Kontaktbahnen (31, 32) versehene und dem Gehäuse (33) als Auflage dienende Gleitplatte (30) zugeordnet ist.

4. Registrieranordnung mit einem Stellungsgeber nach Anspruch 3, dadurch gekennzeichnet, daß die Kontaktbahnen (31, 32) auf einer mit der Platine (1) verbundenen, wenigstens die den Stellmotor (13) steuernden, elektrischen Bauelemente tragenden Leiterplatte aufgebracht sind.

5. Registrieranordnung mit einem Stellungsgeber nach Anspruch 2, dadurch gekennzeichnet, daß zwei Druckfedern (37, 38) derart in Bewegungsrichtung des Registrierschlittens (8) hintereinander angeordnet sind, daß ihre Wirkungslinien die Mittenlinie einer Führungsstange (6) schneiden.

6. Registrieranordnung mit einem Stellungsgeber nach Anspruch 1, dadurch gekennzeichnet, daß die Kontaktbahnen (31, 32) auf einer mit den Bauelementen (46) der Meßschaltung des Registriergerätes bestückten Leiterplatte (45) angeordnet sind und daß ein die Elemente der Registriermechanik tragendes Gestell (47) auf der Leiterplatte (45) befestigt ist.

## Claims

1. Recording arrangement with a position indicator, consisting of a recording slide (8) mounted to slide in a straight line on guide rods (6, 7), transversely to the direction of movement of a recording support (12), which slide (8) supports a recording member (11) and which is in driving connection with a servo motor (13), of two contact paths (31, 32) arranged at a certain distance one beside the other in one plane parallel to the guide rods (6, 7), of a resistive path and a collector path and of a sliding spring contact bridge (40) associated with the contact path (31, 32) and able to move in synchronism with the slide, characterised in that a housing (33) substantially in the shape of a rectangular cuboid open on one side as well as coupling means for the entrainment of the housing (33) by the recording slide (8) are provided, that the length of the opening of the housing (33) corresponds as regards size to twice the length of the contact paths (31, 32), whereas the width of the opening is slightly greater than the total width of both contact paths (31, 32), that the sliding spring contact bridge (40) is located on the inside of the housing wall (34) opposite the opening and that the housing (33) rests under the action of at least one spring located between the recording slide (8) and the housing (33), with the end faces of the housing walls surrounding the opening engaging over the contact paths (31, 32), on a plate associated with the contact paths (31, 32).

2. Recording arrangement with a position indicator according to Claim 1, characterised in that guide pins (35, 36) pointing outwards are formed on the housing wall (34) and openings corresponding to the diameter of the guide pins (35, 36) are formed in the recording slide (8) and that compression springs (37, 38) associated with the guide pins (35, 36) are provided.

3. Recording arrangement with a position indicator according to Claim 1, characterised in that associated with the plate (1) supporting the guide rods (6, 7), the servo motor (13) and the gears (18, 19, 21, 22) is a sliding plate (30) provided with the contact paths (31, 32) and serving as a support for the housing (33).

4. Recording arrangement with a position indicator according to Claim 3, characterised in that the contact paths (31, 32) are located on a printed circuit board connected to the plate (1) supporting at least the electrical components controlling the servo motor (13).

5. Recording arrangement with a position indicator according to Claim 2, characterised in that two compression springs (37, 38) are arranged one behind the other in the direction of movement of the recording slide (8) in such a manner that their lines of action intersect the centre line of a guide rod (6).

6. Recording arrangement with a position indicator according to Claim 1, characterised in that the contact paths (31, 32) are located on a printed circuit board (45) equipped with the components (46) of the measuring circuit of the recording instrument and that a frame (47) supporting the members of the recording mechanism is attached to the printed circuit board (45).

**Revendications**

1. Dispositif d'enregistrement avec un transmetteur de position constitué d'un chariot d'enregistrement (8) monté mobile sur des barres de guidage (6, 7), déplaçable transversalement au sens de déplacement d'un support d'enregistrement (12), lequel chariot d'enregistrement (8) porte un organe enregistreur (11) et coopère fonctionnellement avec un servomoteur (13), de deux voies de contact (31, 32) à savoir d'une voie résistante et d'une voie collectrice, disposées dans un plan parallèle aux barres de guidage (6, 7) avec un certain espacement, et d'un pont de contact à ressort-frotteur (40) associé aux voies de contact (31, 32) et déplaçable en synchronisme avec le chariot, caractérisé par le fait qu'il est prévu un boîtier (33) pour l'essentiel parallélépipédique, unilatéralement ouvert, ainsi que des moyens d'accouplement pour l'entraînement du boîtier (33) par le chariot d'enregistrement (8), que la longueur de l'ouverture du boîtier (33) correspond, dans l'ordre de grandeur, à la double longueur des voies de contact (31, 32) alors que la largeur de l'ouverture est légèrement plus grande que la largeur totale des deux voies de contact (31, 32), que sur la face intérieure de la paroi de boîtier (34) située à l'opposé de l'ouverture est disposé le pont de contact à ressort-frotteur (40) et que le boîtier (33) soumis à l'action d'au moins un ressort disposé entre le chariot d'enregistrement (8) et le boîtier (33) appuie, avec les faces frontales des parois de boîtier entourant l'ouverture, en enveloppant les voies de contact (31, 32) sur une platine associée aux voies de contact (31, 32).

2. Dispositif d'enregistrement avec un transmetteur de position selon la revendication 1, caractérisé par le fait que sur la paroi de boîtier (34) sont formés des tourillons de guidage (35, 36) dirigés vers l'extérieur et dans le chariot d'enregistrement (8) sont prévues des ouvertures correspondant au diamètre des tourillons de guidage (35, 36) et qu'il est prévu des ressorts à pression (37, 38) associés aux tourillons de guidage (35, 36).

3. Dispositif d'enregistrement avec un transmetteur de positions selon la revendication 1, caractérisé par le fait qu'à une platine (1) portant les barres de guidage (6, 7), le servomoteur (13) et l'engrenage (18, 19, 21, 22) est associée une plaque coulissante (30) équipée des voies de contact (31, 32) et servant de support au boîtier (33).

4. Dispositif d'enregistrement avec un transmetteur de position selon la revendication 3, caractérisé par le fait que les voies de contact (31, 32) sont appliquées sur une plaquette à circuits imprimés reliée à la platine (1) et portant au moins les composants électriques commandant le servomoteur (13).

5. Dispositif d'enregistrement avec un transmetteur de position selon la revendication 2, caractérisé par le fait que deux ressorts à pression (37, 38) sont disposés de telle sorte dans le sens de déplacement du chariot d'enregistrement (8), l'un après l'autre, que leurs lignes d'application de la force coupent la ligne médiane d'une barre de guidage (6).

6. Dispositif d'enregistrement avec un transmetteur de position selon la revendication 1, caractérisé par le fait que les voies de contact (31, 32) sont disposées sur une plaquette à circuits imprimés (45) équipée des composants (46) du circuits de mesure de l'appareil enregistreur et qu'un bâti (47) portant les éléments de la mécanique d'enregistrement est fixé sur la plaquette à circuits imprimés (45).

FIG.1

# FIG. 2

FIG. 3